# EUROPEAN PATENT SPECIFICATION

(11) **EP 4 700 265 B1**
(45) Date of publication and mention of the grant of the patent: **21.10.2026**
(21) Application number: 25726747.6
(22) Date of filing: 15.04.2025
(51) Int. Cl.: F16L 41/06, F16L 55/38

(54) **METHOD FOR LAYING CABLE INSIDE PIPES**
VERFAHREN ZUM VERLEGEN VON KABELN IN ROHREN
PROCÉDÉ DE TIRAGE D'UN CÂBLE À L'INTÉRIEUR DE CONDUITS

(30) Priority: 15.04.2024 ES 202430293
(43) Date of publication of application: 25.02.2026
(73) Proprietor: Fibsen Monitorizaciones, S.L., 46132 Almassera (Valencia) (ES)
(72) Inventor: SANZ LATORRE, Javier, 46132 Almassera Valencia (ES)
(74) Representative: Sahuquillo Huerta, Jesús
(86) International application number: PCT/ES2025/070208
(87) International publication number: WO 2025/219626

(56) References cited:
- WO-A1-2014/137047
- JP-A- S6 168 188
- US-B2- 9 057 471

## Description

The present invention refers to a method of installation of cables in pressurized pipes, in which, as a result of the method of the invention, it allows the installation of the cable without interrupting the flow and/or pressure of the fluid, in addition to not causing significant alterations in the original characteristics of the pipes.

The state of the art describes different systems and methods that use optical fibers for leak detection, such as a fiber Bragg network, Raman spectroscopy, vibration, acoustics, among others. Likewise, there are fiber deployments, both external and internal to the pipeline. Within the latter, the state of the art includes a sealing to create incidences in deployments in use installations.

CN115199859A (UNIV CHONGQING) aims to address problems related to late monitoring and low efficiency of leak detection in long-distance subway pipelines. It proposes a rapid diagnostic method for long-distance subway pipeline leakage, which involves several steps. First, distributed optical fibers are installed along the length of the pipeline, equipped with a distributed voltage-temperature-vibration induction device. A distributed fiber optic demodulator analyzes the feedback from the induction device to identify potential leak locations, triggered by encounters with water. Subsequently, a pipeline robot equipped with a camera travel inside the pipeline, capturing images of potential leaks while maintaining real-time communication with a monitoring device. Finally, the collected images are sent to a ground workstation and analyzed using artificial intelligence software to quickly identify and locate leaks. The induction device comprises separate modules for stress, temperature and vibration, all working independently. In addition, the pipeline robot includes a displacement mechanism. These innovations improve the efficiency and accuracy of subway pipeline leak detection.

CN114166427A (YAN S) discloses an invention that provides a method for monitoring external water pressure in tunnel linings. It involves determining the monitoring area based on tunnel leakage and groundwater distribution, then identifying suitable locations for measurement points and fiber grid piezometer devices. These devices are installed using a removable two-section drill rod structure. The drilling process considers casing thickness and drill rod size. Fiber grid piezometer devices are installed with rubber gaskets for sealing. This method offers several advantages, such as accurate water pressure monitoring, reduced construction costs and no impact on construction schedules. Triple sealing measures ensure effective sealing without affecting waterproofing.

JP2014074654A (NIHON SUIDO CONSULTANTS CO LTD) describes a method for detecting anomalies in water flow facilities, such as subway pipes or siphons, with a focus on identifying water leaks in low-pressure water flow systems. Asset management in civil engineering and agriculture is crucial for prolonging the life of existing facilities rather than rebuilding them. Current inspection methods rely mainly on underwater or aerial robots with limitations. The proposed method uses a guide installed in the water flow facility, connected to an anomaly detection device. The guide simplifies the inspection process, making it less restrictive and allowing effective detection even in low pressure conditions. The method includes steps for float placement, guide installation and FFT analysis for accurate detection.

Document CN111271122A (SHANGHAI TONGYAN CIVIL ENG TECHNOLOGY CO) discloses an invention that focuses on solving a problem of tightness of elements of a gas pipeline. It is characterized as follows: when the gas escaping from the test object is drained into the cavity of the leak detection valve body through the trachea, the level of colored liquid in the cavity drops due to atmospheric pressure, and when the level of colored liquid is lower than the fiber optic probe, the fiber optic switch outputs an output signal and then the leaking products are separated. Compared with the previous technique, this invention has a fast response and can measure and control even microscopic leaks instantaneously due to an integrated design and the ability to make the inner diameter of the pipe in the body cavity of the leak detection valve very thin.

That is, among the above-described priorities, CN115199859A where the fiber is introduced with an inductor and then a robot with a camera performs the checks, CN114166427A where rod sections are used to deploy the optical fiber and its subsequent sealing, JP2014074654A which installs guides and floats, and CN111271122A which focuses on leaks in the conduction elements.

Document JP361068188A, filed by Osaka Gas Co., describes an improved method for inserting communication lines or wires into underground conduits without extensive excavation. Traditional approaches required digging to expose side branches of the main conduit, resulting in high labor, time, and cost. The invention introduces a technique that allows wire insertion through branching pipes using an expandable and retractable guiding tool. The system involves inserting a pulling device from an above-ground access point into the conduit network, where expansion mechanisms help direct the line through bifurcations. This innovation significantly reduces the need for surface excavation and minimizes environmental disruption. The proposed method increases operational efficiency and safety in urban gas or utility pipeline systems. Overall, the patent focuses on achieving smooth and rapid line installation using compact, flexible tools adaptable to complex underground branching networks, representing an early step toward trenchless pipeline maintenance and wiring technologies.

Document US9057471 B2, assigned to Jameson LLC, discloses a method and device for tapping and tracing a concealed conduit such as a buried or hidden pipe without interrupting its operation. The system includes a tapping tee assembly that connects to the conduit, a flexible fiberglass rodder containing an electrical conductor, and a stuffing box that seals around the rodder to maintain pressure while allowing movement. A signal transmitter sends electrical pulses through the rodder, which can then be detected by a receiver above ground to trace the pipe's route. The device allows location of both the conduit's continuous path and specific points like junctions or blockages. Lubrication and sealing mechanisms prevent leakage and ensure smooth rodder movement. This invention enables accurate underground pipe tracing while the pipe remains in service, reducing the need for excavation and downtime. It improves maintenance efficiency for water, gas, and utility networks through minimally invasive monitoring.

Finally, document WO2014137047A1 describes a real-time monitoring and inspection system for large-scale water pipelines without stopping water flow. The system includes an insertion mechanism to deploy an inspection module, a retrieval device, a camera with LED lighting for visual inspection, and an acoustic sensor to detect leakage sounds. It also uses a low-frequency transmitter and receiver pair to determine the module's exact location within the pipeline. Data is transmitted to a vehicle equipped with a user terminal and GPS for real-time analysis and mapping. The invention enables remote visualization and acoustic diagnosis of pipe conditions, including detecting leaks and structural issues, while maintaining water service. This design improves efficiency, reduces maintenance costs, and enhances the accuracy of pipeline diagnostics. By integrating imaging, sound sensing, and location tracking, the system offers comprehensive, non-intrusive monitoring for municipal water infrastructure.

However, a new method of inserting the guide, with its subsequent dragging (both passive and self-propelled) is required, as well as an element that allows its collection and ensures its watertightness.

An object of the present invention is a method of laying fiber optic cables inside fluid distribution pipes consisting of several stages, which allows, in an economical and efficient manner and with the pipe underload, i.e., with fluid inside the pipe under pressure, a safe and efficient installation of one or more fiber optic cables inside the pipe. This object is achieved by the method of claim 1. In the claims which depend directly or indirectly on claim 1, various embodiments and aspects of the invention are described.

Thanks to the claimed invention, it is possible to lay cable inside pipe networks in a watertight and safe way so as not to interrupt the transport of fluids under pressure. Moreover, the present invention is very versatile, since it is not affected by the geometrical conditions or materials constituting the pipeline, nor whether the pipeline is a new construction or a pre-existing one.

In addition, the method of the invention is a non-invasive method, as it does not disturb the infrastructure of the pipeline network, nor the integrity of the pipeline network. For installation, only a small hole in the pipe configured for inserting and removing the cable is required. At the same time, the invention allows the cable to pass through during the laying of the cable, being able to clamp the cable once installed without affecting the structural integrity of the pipe and cable.

Finally, the present invention describes a compact method that allows the execution in reduced spaces thanks to a compact, dual access point deployment and extraction device system, which in turn allows it to be disassembled to be reused again and once the laying is finished the system hardly occupies any space without affecting its functionality.

Throughout the description and the claims, the word "comprises", and variants thereof are not intended to exclude other technical features, additives, components or steps. To those skilled in the art, other objects, advantages and features of the invention will be apparent in part from the description and in part from the practice of the invention. The following examples and drawings are provided by way of illustration and are not intended to restrict the present invention. Furthermore, the present invention covers all possible combinations of particular and preferred embodiments indicated herein.

The following is a very brief description of a series of drawings which help to better understand the invention, and which relate expressly to an embodiment of said invention which is presented as a non-limiting example thereof.
Figure 1 shows an isolated view of the coupling phase of the method of the invention.
Figure 2 shows an isolated view of the drilling phase of the method.
Figure 3 shows an isolated view of the launch phase of the method.
Figure 4 shows an isolated view of the extraction step of the method.
Figure 5 shows an isolated view of the closing phase of the method.
Figure 6 shows an overall view of the method of the invention.

The present invention provides a non-invasive and uninterrupted method of laying cable in pipelines carrying fluids under pressure, thus achieving continuity of fluid supply to preserve the original integrity of the pipelines, which are fundamental aspects in applications where operation is critical, such as in water distribution systems or in industrial processes that depend on a continuous supply of raw materials.

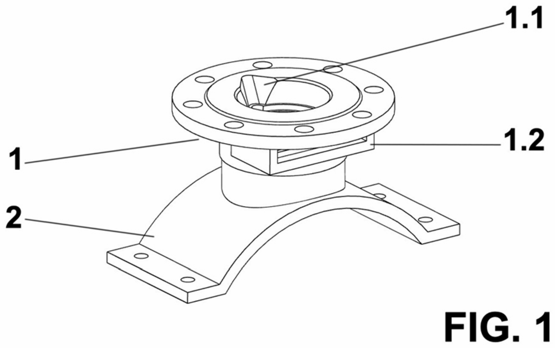

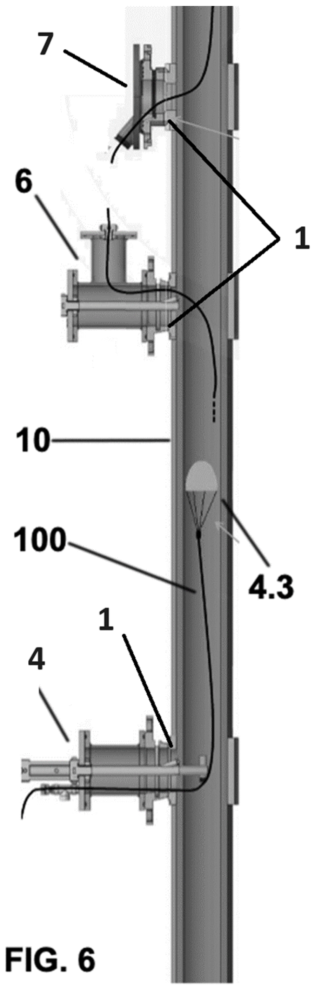

As shown in Figure 1, the method of the invention starts with placing an adapter 1 on the pipe 10 (shown in Figure 6), joining by means of a coupling 2, such as a collar, flange or sleeve. Alternatively, the adapter 1 can be welded directly to the pipe to secure or make other connections secure.

The adapter 1 is configured to route the cable through the inside of the pipe 10 without stopping the flow. In a particular non-limiting embodiment, the adapter 1 is a quick release through a small hole in the pipe 10. Furthermore, in another particular embodiment, the adapter incorporates a guillotine-type side seal 1.2 (i.e., a piece that is inserted horizontally along its side, 1.3) to perform a temporary watertight seal during the performance of the work of laying the cable 100.

The design of the adapter 1 is compact and ergonomic and is configured to efficiently adapt and attach to any attachment element to the pipe 10, such as maybe the coupling 2 which, in the non-limiting example of the attached figures, is a threaded collar, avoiding compromising the original structural integrity of the pipe. In addition, the adapter 1 comprises a fastening element 1.1 for the cable, which provides attachment and eliminates the need for other invasive supports along the pipe 10.

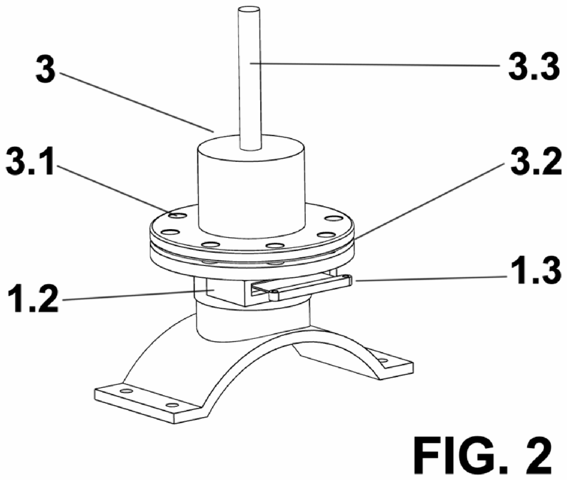

The next stage of the method is the drilling of the pipe 10, as shown in Figure 2. At this stage, a drilling rig 3 is fixed and secured onto the adapter 1 by using suitable screws or fastening systems 3.1. This drilling rig 3 is designed in a similar way to a hand drill, but with a sealing system 3.2 integrated in the mouth to ensure watertightness and prevent the passage of water. Once the drilling rig 3 is correctly installed, drilling is performed on the surface of the pipe 10. During this process, the necessary pressure is exerted to drill the pipe in a precise and controlled manner. Once drilling is complete, the mast 3.3. holding the drill bit is raised past the side seal area 1.2 by means of a guillotine 1.3, or similar system. This step is crucial to ensure that the cutter 1.3 inserted in the side seal 1.2 can block the passage of water and ensure the watertightness of the system. With the guillotine 1.3 closed and the watertightness guaranteed, proceed to the removal of the drilling rig 3.

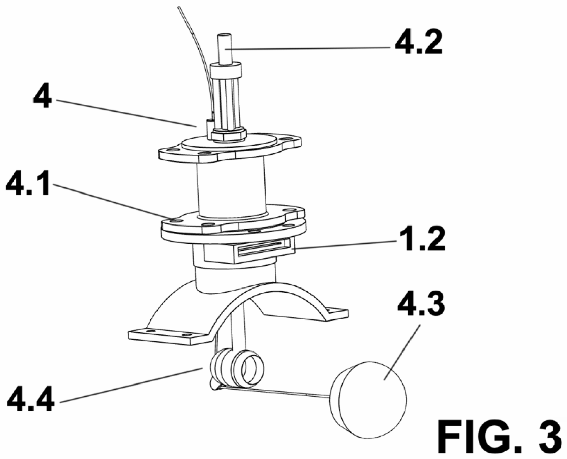

Once the drilling rig 3 has been removed, the method proceeds to the launching or deployment phase shown in Figure 3. To do this, a deployment kit 4 is placed and secured on the adapter 1 using screws 4.1 or similar. The deployment equipment 4 is designed to ensure watertightness in the area of work during the pulling of the cable 100. With the watertight area secured, proceed to open the side seal 1.2. This passage allows the flow of water and the passage to lower the mast 4.2 equipped with a release system 4.4 of the propulsion mechanism 4.3. This propulsion mechanism 4.3 is designed to travel along the pipeline 10 and reach the extraction zone. In addition, the system may be provided with a cable that acts as a guide. When the propulsion mechanism is deployed, it pulls the cable 100 along the pipe 10, following the desired trajectory until the extraction zone is reached.

The deployment device 4 is configured for laying the cable 100 inside the pipe 10 in a controlled and watertight manner. As indicated, the deployment device 4 consists of an element which is fixed on the adapter 1 and which is activated to launch the cable inside the pipe. This device is equipped with a release system that allows its use even in turbulent flow conditions and high pressure, and a cable guide for its safe and precise insertion, avoiding damage to the cable structure. The propulsion mechanism 4.3 (passive or self-propelled) provides the necessary energy to pull the cable 100 along the pipe 10 and adjust the trajectory according to the specific conditions of the pipe network.

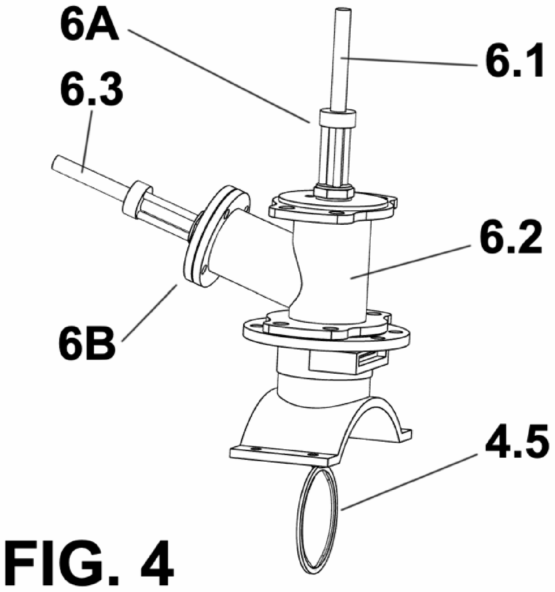

Once the propulsion mechanism 4.3 has reached the extraction zone, it is trapped by a capture device 4.5. This initiates the extraction phase shown in Figure 4. This capture device 4.5, which may be a net, magnet or other type of capture mechanism, ensures the safe capture of the propulsion mechanism 4.3. Once captured, the mast 6.1 supporting the capture mechanism 4.5 is raised perpendicular to the pipe 10. This allows the capture mechanism 4.5, together with the propulsion device 4.3, to enter the inner chamber 6.2 of the extraction device 6, namely a first support 6A.

Next, once inside the internal chamber 6.2 of the first support 6A of the extraction device 6, the capture device 4.5 is transferred to a second support 6B via another mast 6.3 accessing from a different access, either perpendicular or in another direction. This process ensures that the capture device 4.5 is picked up from the first support 6A, leaving the cable 100 in the channeling 1.1 designed in the adapter 1.

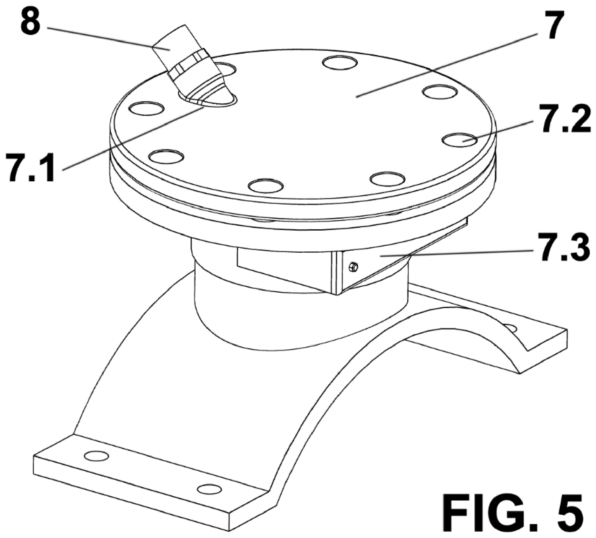

That is, the extraction device 6 is configured for capturing and extracting the cable 100 traveling inside the pipe in a safe and watertight manner. The extraction device 6 consists of a unit that is fixed on the adapter 1 at the point where it is desired to extract the cable. For example, with a geometry with two access points (i.e., non-limitingly, in the form of a "T", as shown in Figure 5) that allow it to control and direct the capture mechanism, such as hooks, net, magnet or any others, and to extract the cable in a watertight and safe manner. As in the case of the deployment device 4, its modular design allows the cable to be removed once the laying of the cable is completed, minimizing the visible impact on the network.

With the cable 100 in its final position and the device correctly retracted, the sash 1.3 is inserted through the side seal 1.2 to shut off the water flow. This step is crucial to ensure a tight and secure seal of the hydraulic system.

With the water passage closed, we proceed to replace the extraction mechanism 6 with a special flange 7 that has a small hole 7.1, i.e., we are in the closing phase shown in Figure 5. This hole 7.1 has the same inclination as the channeling 1.1 of the adapter 1, which ensures the continuity of the cable 100 as it passes through it. Once the flange 7 is in place, a cable gland 8 is installed in the small, inclined hole 7.1 to ensure sealing at that point, while allowing the passage of the cable 100.

Next, tighten the bolts 7.2 or any other fasteners to secure the flange properly in place. Once the watertightness is assured, the guillotine used to cut off the water flow during the installation process is removed. Finally, a safety cap 7.3 is placed over the side hole where the cutout 1.3 was made. This cap 7.3 protects against any possible leakage in the side seal 1.2 and ensures the integrity and safety of the system as a whole.

Figure 6 shows schematically the different phases of the invention as a whole. Thus, it is shown the phase of perforation and launching of the capture device 4.5 until it is picked up by the extraction device 6 and how, after extraction of the launched capture device 4.5, the elements are removed in the closing phase.

Thus, the present invention is a method of laying fiber optic cable that stands out for its ability to be executed in pipe networks without interrupting the transport of the fluid under pressure, thanks to a set of devices that provide a hermetic seal during the entire process of laying the cable. It also has a cable guidance and control system that ensures a precise and directed deployment of the cable, even in turbulent flows and high pressure, without compromising the structural integrity of the cable itself or the pipeline.

The design of the adapter allows its compatibility of use in new or existing networks, regardless of the diameter or material of the pipe and without altering the original structural integrity of the pipe. Furthermore, its design allows the cable to be attached to its own body and eliminates the need for other invasive supports that affect the structural integrity of the pipeline.

Finally, the insertion and extraction devices have a modular and compact design that allows the execution of the cable laying in reduced spaces and once the cable laying work has been carried out, they can be removed, minimizing the visible impact on the network.

## Claims

1. A method of laying cable (100) inside pipes (10) without interrupting the flow and/or pressure of fluid in the pipe (10) comprising the steps of:
coupling an adapter (1) on the pipe (10), wherein said adapter (1) comprises at least one side seal (1.2) for a temporary watertight seal during laying of the cable (100);
deploying the cable (100) by means of a deployment equipment (4) fixed watertight on the adapter (1), and which, in turn, comprises the stages of:
with the watertight zone secured, the side seal (1.2) is opened to allow the flow of water and the passage to lower a mast (4.2) equipped with a release system (4.4) of the propulsion mechanism (4.3); wherein said propulsion mechanism (4.3) is configured to move along the pipe (10) and reach the extraction zone by dragging the cable (100) along the pipe (10);
extract the propulsion mechanism (4.3) and the cable (100) by means of a capture mechanism (4.5) through an extraction device (6) fixed watertight on the adapter (1) and comprising a first support (6A), with a first mast (6.1) and a first internal chamber (6.2), as well as a second support (6B), with a second mast (6.3) in such a way that:
the first mast (6.1) supporting the catching mechanism (4.5) is raised perpendicularly to the pipe (10) so that the catching mechanism (4.5) together with the propulsion device (4.3) enters the inner chamber (6.2) of the extraction device (6);
and where once inside the first internal chamber (6.2) of the first support (6A) of the extraction device (6) the capture device (4.5) is transferred to the second support (6B) through another mast (6.3) that accesses from a different access, leaving the cable (100) in the channeling (1.1) of the adapter (1), and
with the cable (100) in the channel (1.1) of the adapter (1), the cutter (1.3) is inserted through the side seal (1.2) to cut off the water flow;
replace the extraction mechanism (6) by a flange (7) with a hole (7.1) with the same inclination as the conduit (1.1) of the adapter (1); and where once the flange (7) is in place, a cable gland (8) is installed in the inclined hole (7.1) to ensure the sealing at that point, while allowing the cable (100) to pass through.

2. The method according to claim 1 wherein the coupling of the adapter (1) on the pipe (10) is made either directly by drilling the pipe (10) by means of a drilling equipment (3) fixed tightly on the adapter (1), or on a coupling element (2) selected among a collar, a flange, a sleeve, or a combination of the above

3. The method according to claim 1 or 2 wherein the adapter comprises a fixing element (1.1) for the cable (100).

4. The method according to any one of the preceding claims, wherein the drilling equipment (3) comprises a watertight joint (3.2) and is fixed and secured on the adapter (1) by use of clamping means (3.1).

5. The method according to any one of the preceding claims, wherein once the drilling stage is completed, a mast (3.3) holding a drill bit of the drilling equipment (3.3) is raised to pass the area of the side seal (1.2) of the adapter (1) after which a guillotine (1.3) is inserted in said side seal (1.2) to block the passage of water and ensure the watertightness of the assembly; and wherein with the guillotine (1.3) closed and the watertightness ensured, the drilling equipment (3) is removed.

6. The method according to any one of the preceding claims, wherein the propulsion mechanism (4.3) is passive or self-propelled.

7. The method according to any one of the preceding claims wherein the capture device (4.5) is one selected from a net, magnet or other type of propulsion mechanism capture mechanism (4.3).

8. The method according to any of the preceding claims, wherein once the watertightness is ensured after placing the flange (7), the guillotine (1.3) used to cut off the water flow during the installation process is removed and a safety cover (7.3) is placed over the side seal (1.2).

## Patentansprüche

1. Verfahren zum Verlegen eines Kabels (100) in Rohren (10), ohne den Durchfluss und/oder den Druck des Fluids im Rohr (10) zu unterbrechen, mit den folgenden Schritten:
Anbringen
eines Adapters (1) an das Rohr (10), wobei der Adapter (1) mindestens eine seitliche Dichtung (1.2) für eine vorübergehende wasserdichte Abdichtung während der Verlegung des Kabels (100) umfasst;
Ausbringen des Kabels (100) mittels einer Ausbringvorrichtung (4), die wasserdicht am Adapter (1) befestigt ist und die wiederum die folgenden Schritte umfasst:
Bei gesicherter wasserdichter Zone wird die Seitendichtung (1.2) geöffnet, um den Wasserfluss und den Durchgang zum Absenken eines mit einem Auslösesystem (4.4) des Antriebsmechanismus (4.3) ausgestatteten Mastes (4.2) zu ermöglichen; wobei der Antriebsmechanismus (4.3) so ausgelegt ist, dass er sich entlang des Rohrs (10) bewegt und den Entnahmebereich erreicht, indem er das Kabel (100) entlang des Rohrs (10) mitzieht;
Entnahme des Antriebsmechanismus (4.3) und des Kabels (100) mittels eines Aufnahmemechanismus (4.5) durch eine Entnahmevorrichtung (6), die wasserdicht am Adapter (1) befestigt ist und eine erste Halterung (6A) umfasst, mit einem ersten Mast (6.1) und einer ersten Innenkammer (6.2) sowie einer zweiten Halterung (6B) mit einem zweiten Mast (6.3), derart, dass:
der erste Mast (6.1), der den Fangmechanismus (4.5) trägt, senkrecht zum Rohr (10) angehoben wird, sodass der Fangmechanismus (4.5) zusammen mit der Antriebsvorrichtung (4.3) in die Innenkammer (6.2) der Ausziehvorrichtung (6) eintritt;
und wobei die Auffangvorrichtung (4.5), sobald sie sich in der ersten Innenkammer (6.2) des ersten Trägers (6A) der Entnahmevorrichtung (6) befindet, über einen weiteren Mast (6.3), der von einer anderen Seite aus zugänglich ist, auf den zweiten Träger (6B) übertragen wird, wobei das Kabel (100) in der Führung (1.1) des Adapters (1) verbleibt, und
wobei sich das Kabel (100) im Kanal (1.1) des Adapters (1) befindet, wird das Schneidwerkzeug (1.3) durch die seitliche Dichtung (1.2) eingeführt, um den Wasserfluss zu unterbrechen;
der Entnahmemechanismus (6) wird durch einen Flansch (7) mit einer Bohrung (7.1) ersetzt, deren Neigung der des Kanals (1.1) des Adapters (1) entspricht; und wobei, sobald der Flansch (7) angebracht ist, eine Kabelverschraubung (8) in die geneigte Bohrung (7.1) eingesetzt wird, um die Abdichtung an dieser Stelle zu gewährleisten und gleichzeitig den Durchgang des Kabels (100) zu ermöglichen.

2. Verfahren nach Anspruch 1, wobei die Verbindung des Adapters (1) mit dem Rohr (10) entweder direkt durch Bohren des Rohrs (10) mittels einer fest am Adapter (1) befestigten Bohrausrüstung (3) oder über ein Verbindungselement (2) erfolgt, das aus einer Manschette, einem Flansch, einer Hülse oder einer Kombination der vorgenannten Elemente ausgewählt wird

3. - Verfahren nach Anspruch 1 oder 2, wobei der Adapter ein Befestigungselement (1.1) für das Kabel (100) umfasst.

4. Verfahren nach einem der vorstehenden Ansprüche, wobei die Bohrvorrichtung (3) eine wasserdichte Verbindung (3.2) umfasst und mittels einer Klemmvorrichtung (3.1) am Adapter (1) befestigt und gesichert ist.

5. Verfahren nach einem der vorstehenden Ansprüche, wobei nach Abschluss der Bohrphase ein Mast (3.3), der einen Bohrmeißel der Bohrausrüstung (3.3) hält, angehoben wird, um den Bereich der Seitendichtung (1.2) des Adapters (1) zu passieren, woraufhin eine Guillotine (1.3) in die genannte Seitendichtung (1.2) eingeführt wird, um den Wasserdurchfluss zu blockieren und die Wasserdichtheit der Baugruppe sicherzustellen; und wobei bei geschlossener Guillotine (1.3) und gesicherter Wasserdichtheit die Bohrvorrichtung (3) entfernt wird.

6. - Verfahren nach einem der vorstehenden Ansprüche, wobei der Antriebsmechanismus (4.3) passiv oder selbstangetrieben ist.

7. Verfahren nach einem der vorstehenden Ansprüche, wobei die Auffangvorrichtung (4.5) ein Netz, ein Magnet oder eine andere Art von Auffangmechanismus (4.3) des Antriebsmechanismus ist.

8. Verfahren nach einem der vorstehenden Ansprüche, wobei, sobald die Wasserdichtigkeit nach dem Anbringen des Flansches (7) gewährleistet ist, die Guillotine (1.3), die während des Installationsvorgangs zum Unterbrechen des Wasserflusses verwendet wurde, entfernt und eine Sicherheitsabdeckung (7.3) über die Seitendichtung (1.2) angebracht wird.

## Revendications

1. Procédé de pose d'un câble (100) à l'intérieur de conduites (10) sans interrompre le débit et/ou la pression du fluide dans la conduite (10), comprenant les étapes suivantes:
raccorder
d'un adaptateur (1) sur la conduite (10), ledit adaptateur (1) comportant au moins un joint latéral (1.2) destiné à assurer une étanchéité temporaire à l'eau pendant la pose du câble (100) ;
déployer le câble (100) à l'aide d'un équipement de déploiement (4) fixé de manière étanche sur l'adaptateur (1), lequel comprend à son tour les étapes suivantes :
une fois la zone étanche sécurisée, le joint latéral (1.2) est ouvert pour permettre l'écoulement de l'eau et le passage permettant d'abaisser un mât (4.2) équipé d'un système de libération (4.4) du mécanisme de propulsion (4.3) ; ledit mécanisme de propulsion (4.3) étant configuré pour se déplacer le long du tuyau (10) et atteindre la zone d'extraction en traînant le câble (100) le long du tuyau (10) ;
extraire le mécanisme de propulsion (4.3) et le câble (100) au moyen d'un mécanisme de capture (4.5) par l'intermédiaire d'un dispositif d'extraction (6) fixé de manière étanche sur l'adaptateur (1) et comprenant un premier support (6A), doté d'un premier mât (6.1) et d'une première chambre interne (6.2), ainsi que d'un deuxième support (6B), doté d'un deuxième mât (6.3), de telle sorte que :
le premier mât (6.1) supportant le mécanisme de capture (4.5) soit relevé perpendiculairement au tuyau (10) de sorte que le mécanisme de capture (4.5), conjointement avec le dispositif de propulsion (4.3), pénètre dans la chambre interne (6.2) du dispositif d'extraction (6) ;
et où, une fois à l'intérieur de la première chambre interne (6.2) du premier support (6A) du dispositif d'extraction (6), le dispositif de capture (4.5) est transféré vers le deuxième support (6B) par l'intermédiaire d'un autre mât (6.3) qui y accède par une autre voie d'accès, en laissant le câble (100) dans le canal (1.1) de l'adaptateur (1), et
le câble (100) se trouvant dans le canal (1.1) de l'adaptateur (1), le dispositif de coupe (1.3) est inséré à travers le joint latéral (1.2) afin de couper l'écoulement d'eau ;
remplacer le mécanisme d'extraction (6) par une bride (7) comportant un trou (7.1) dont l' a la même inclinaison que le conduit (1.1) de l'adaptateur (1) ; et, une fois la bride (7) en place, un presse-étoupe (8) est installé dans le trou incliné (7.1) pour assurer l'étanchéité à cet endroit, tout en permettant le passage du câble (100).

2. Procédé selon la revendication 1, dans lequel le raccordement de l'adaptateur (1) sur le tuyau (10) s'effectue soit directement en perçant le tuyau (10) à l'aide d'un équipement de perçage (3) solidement fixé sur l'adaptateur (1), soit sur un élément de raccordement (2) choisi parmi un collier, une bride, un manchon ou une combinaison de ces éléments

3. Procédé selon la revendication 1 ou 2, dans lequel l'adaptateur comprend un élément de fixation (1.1) pour le câble (100).

4. Procédé selon l'une quelconque des revendications précédentes, dans lequel l'équipement de forage (3) comprend un joint étanche (3.2) et est fixé et maintenu sur l'adaptateur (1) à l'aide de moyens de serrage (3.1).

5. Procédé selon l'une quelconque des revendications précédentes, dans lequel, une fois l'étape de forage terminée, un mât (3.3) supportant un trépan de l'équipement de forage (3.3) est relevé pour passer au-delà de la zone du joint latéral (1.2) de l'adaptateur (1), après quoi une guillotine (1.3) est insérée dans ledit joint latéral (1.2) afin de bloquer le passage de l'eau et d'assurer l'étanchéité de l'ensemble ; et dans laquelle, une fois la guillotine (1.3) fermée et l'étanchéité assurée, l'équipement de forage (3) est retiré.

6. Procédé selon l'une quelconque des revendications précédentes, dans lequel le mécanisme de propulsion (4.3) est passif ou autopropulsé.

7. Procédé selon l'une quelconque des revendications précédentes, dans lequel le dispositif de capture (4.5) est choisi parmi un filet, un aimant ou tout autre type de mécanisme de capture (4.3) du mécanisme de propulsion.

8. Procédé selon l'une quelconque des revendications précédentes, dans lequel, une fois l'étanchéité assurée après la mise en place de la bride (7), la guillotine (1.3) utilisée pour couper le débit d'eau pendant le processus d'installation est retirée et un couvercle de sécurité (7.3) est placé sur le joint latéral (1.2).
